# EUROPÄISCHE PATENTSCHRIFT

(11) **EP 3 404 208 B1**
(45) Veröffentlichungstag und Bekanntmachung des Hinweises auf die Patenterteilung: **22.01.2020**
(21) Anmeldenummer: 18166813.8
(22) Anmeldetag: 11.04.2018
(51) Int. Cl.: F01D 5/08, F01D 25/12, F02C 7/18, F23R 3/60, F01D 25/24

(54) **STRÖMUNGSLEITVORRICHTUNG UND VERFAHREN ZUR AUSBILDUNG EINER STRÖMUNGSLEITVORRICHTUNG**
AIR FLOW GUIDANCE DEVICE AND METHOD FOR FORMATION OF SAME
DISPOSITIF DE GUIDAGE DE FLUX ET PROCÉDÉ DE FORMATION D'UN DISPOSITIF DE GUIDAGE DE FLUX

(30) Priorität: 05.05.2017 DE 102017207640
(43) Veröffentlichungstag der Anmeldung: 21.11.2018
(73) Patentinhaber: Rolls-Royce Deutschland Ltd & Co KG, 15827 Blankenfelde-Mahlow (DE)
(72) Erfinder: SIKORSKI, Igor, 15827 Blankenfelde-Mahlow (DE); PHILLIPS, Jason, 15827 Blankenfelde-Mahlow (DE)
(74) Vertreter: Maikowski & Ninnemann Patentanwälte Partnerschaft mbB

(56) Entgegenhaltungen:
- EP-A1- 1 978 305
- EP-A1- 3 153 658
- EP-A2- 2 226 475
- GB-A- 801 944

## Beschreibung

Die Erfindung betrifft ein Verfahren zur Ausbildung einer Strömungsleitvorrichtung mit den Merkmalen des Anspruchs 1 und eine Strömungsleitvorrichtung mit den Merkmalen des Anspruchs 12.

Strömungsleitvorrichtungen mit Strömungsleitelementen zur Führung eines Teilstroms innerhalb einer Turbomaschine in der hier in Rede stehenden Art sind z.B. aus der DE 10 2013 220 455 A1, der US 5 090 865 A, der US 4 190 397 A, der US 2010 / 0316484 A1, der EP 1 978 305 A1, EP 3 153 658 A1 oder der GB 801 944 A bekannt. Die Strömungsleitelemente müssen dabei effektiv mit anderen Bauteilen der Turbomaschine verbindbar sein.

Die Aufgabe wird durch ein Verfahren zur Ausbildung einer Strömungsleitvorrichtung mit den Merkmalen des Anspruchs 1 gelöst, wobei
a) ein Formwerkzeug mit einem nicht-kreisförmigen Querschnitt, dazu verwendet wird, einem kreiszylindrischen Formkörper für das Strömungsleitelement zumindest teilweise einen nicht-kreisförmigen Querschnitt als eine geschlossene Hüllfläche zu geben,
b) das Strömungsleitelement zur Verbindung des Strömungsleitelements (30) mit einem anderen Bauteil der Turbomaschine eine Reibschlussverbindungsfläche am Umfang aufweist, wobei die Reibschlussverbindungsfläche mit der geschlossenen Hüllfläche mit mindestens zwei gegenüberliegenden Punkten in das Bauteil mit einer kreiszylindrischen Dichtfläche verformt gesetzt wird, so dass die mindestens zwei Punkte der geschlossenen Hüllfläche im Zusammenbau nach Verformung in mindestens zwei gegenüberliegenden reibschlüssigen Kontaktbereichen der kreiszylindrischen Dichtfläche angeordnet sind.

Die Aufgabe wird auch durch eine Strömungsleitvorrichtung einer Turbomaschine nach Anspruch 12 gelöst.

Durch eine Reibschlussverbindungsfläche am Umfang des Strömungsleitelements ist eine Verbindung des Strömungsleitelements mit einem anderen Bauteil der Turbomaschine herstellbar. Dabei weist das Strömungsleitelement am Umfang eine Reibschlussverbindungsfläche auf, die zur Verbindung des Strömungsleitelements mit einem anderen Bauteil der Turbomaschine dient. Die Reibschlussverbindungsfläche des Strömungsleitelements weist dabei eine geschlossene Hüllfläche (mit einem nicht-kreisförmigen Querschnitt) mit mindestens zwei gegenüberliegenden Punkten auf, wobei das Strömungsleitelement in das Bauteil mit einer kreiszylindrischen Dichtfläche verformt einsetzbar ist, wobei die mindestens zwei Punkte der geschlossenen Hüllfläche im Zusammenbau nach Verformung in mindestens zwei gegenüberliegenden reibschlüssigen Kontaktbereichen der kreiszylindrischen Dichtfläche angeordnet sind.

Somit kann allein durch die Formgebung des Strömungsleitelements im Umfangsbereich erreicht werden, dass im Betrieb ein fester Sitz im Bauteil vorliegt. Besondere Formschlussmittel sind somit nicht erforderlich, was die Verbindungsherstellung vereinfacht.

In einer Ausführungsform weist die geschlossene Hüllfläche einen elliptischen Querschnitt, einen regelmäßigen polygonalen Querschnitt oder einen ovalen Querschnitt auf. Diese Hüllflächen sind so verformbar, dass sie sich gut in die kreiszylindrische Dichtfläche des Bauteils einsetzen lassen. Ein Strömungsleitelement mit einem regelmäßigen polygonalen Querschnitt ist symmetrisch zum Mittelpunkt ausgebildet, so dass die Eckpunkte des Polygons nach der Verformung, d.h. dem Einpassen in die kreiszylindrische Dichtfläche, in gegenüberliegenden Kontaktbereichen liegen. Ein Strömungsleitelement mit einem elliptischen Querschnitt weist zwei Symmetrieachsen auf, so dass z.B. Punkte an den Enden der großen Achse der Ellipse nach der Verformung gegenüber in der kreiszylindrischen Dichtfläche liegen. Analog weist ein Strömungsleitelement mit einem ovalen Querschnitt eine Symmetrieachse auf, so dass Punkte an den Enden der Symmetrieachse nach der Verformung wieder einander gegenüberliegen.

Für den Fall eines elliptischen Querschnitts der geschlossenen Hüllfläche weist eine Ausführungsform eine Exzentrizität zwischen 0,95 und 0,999, insbesondere zwischen 0,99 und 0,996, auf. Durch die Einstellung der Exzentrizität kann z.B. die Einpassung des Strömungsleitelements in die kreiszylindrische Dichtfläche definiert werden.

In einer Ausführungsform weist die Reibschlussverbindungsfläche eine Durchmessertoleranz von +/- 0,3 mm auf. In einer weiteren Ausführungsform weist das Bauteil mit der kreiszylindrischen Dichtfläche eine Durchmessertoleranz von +/- 0,1 mm auf. Mit diesen Toleranzen der Reibschlussverbindungsfläche und der kreiszylindrischen Dichtfläche lässt sich ein effektiver Sitz des Strömungsleitelements im Bauteil sicherstellen.

Im Einbau des Strömungsleitelements weist der Ringkanal mindestens teilweise eine im Wesentlichen konstante radiale Höhe, einen konvergenten Teil und / oder einen divergenten Teil auf.

In einer Ausführungsform liegen nach Umformung zwischen der verformten Hüllfläche des Strömungsleitelements und der kreiszylindrischen Dichtfläche am Umfang mindestens zwei Spalte vor. Durch diese Spalte kann es einen gewissen Strömungsaustausch geben. Die Anzahl und Form der Spalte hängt dabei von der Form der Reibschlussverbindungsfläche mit der geschlossenen Hüllfläche ab. Wenn z.B. die geschlossene Hüllfläche einen elliptischen Querschnitt aufweist, liegen z.B. nach der Verformung entlang der großen Achse der Ellipse zwischen der verformten Hüllfläche und der kreiszylindrischen Dichtfläche aus Symmetriegründen zwei Spalte vor. In diesem Fall, kann die größte radiale Breite der beiden Spalte kleiner als 0,5 mm sein, insbesondere kleiner als 0,3 mm, ganz insbesondere kleiner als 0,2 mm.

Für die hohen Temperaturanforderungen ist das Strömungsleitelement in einer Ausführungsform aus einer Nickellegierung, insbesondere Inconel 718, hergestellt.

Ausführungsformen der Strömungsvorrichtung können in einem Flugzeugtriebwerk verwendet werden. Dabei können sie insbesondere so verwendet werden, dass sich die Strömungsleitvorrichtung mit dem Strömungsleitelement axial von einem Austrittsleitrad eines Hochdruckkompressors bis zum mittleren Bereich einer Brennkammer erstreckt.

In Zusammenhang mit den in den Figuren dargestellten Ausführungsbeispielen wird die Erfindung erläutert. Dabei zeigt
- Fig. 1: eine schematische Darstellung eines Flugzeugtriebwerks;
- Fig. 2: eine schematische Schnittdarstellung durch eine Ausführungsform einer Strömungsleitvorrichtung mit einem Strömungsleitelement;
- Fig. 3: eine Seitenansicht einer Ausführungsform eines Strömungsleitelements;
- Fig. 4A: eine schematische Darstellung des Querschnitts einer Ausführungsform eines Strömungsleitelements vor einem Zusammenbau mit einem Bauteil einer Turbomaschine;
- Fig. 4B: eine schematische Darstellung des Querschnitts einer Ausführungsform eines Strömungsleitelements und der Verformung nach dem Einbau in das Bauteil;
- Fig. 5: eine Seitenansicht einer Vorrichtung zur Ausbildung eines elliptischen Querschnitts in einer Ausführungsform eines Strömungsleitelements.

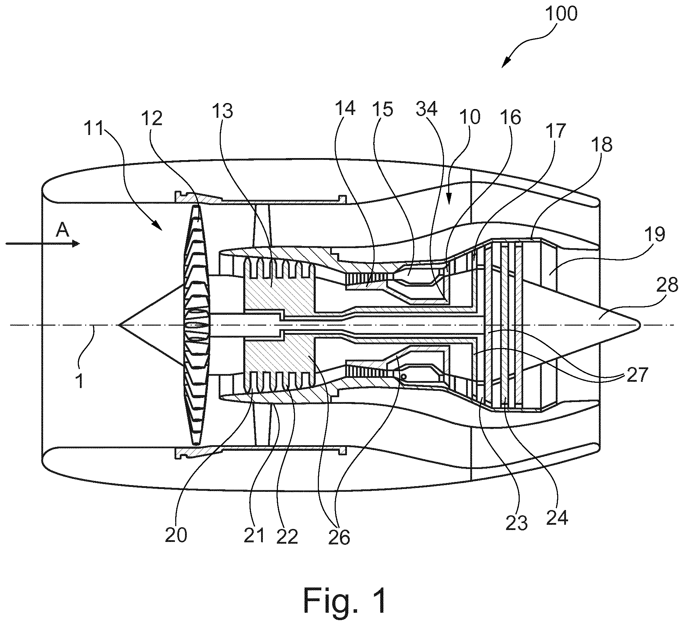

In Fig. 1 ist ein an sich bekanntes Flugzeugtriebwerk 10 als Beispiel für eine Turbomaschine dargestellt. Andere Turbomaschinen sind z.B. stationäre Gasturbinen oder Schiffsantriebe.

Das Triebwerk 100 ist in der dargestellten Form als 3-Wellen Triebwerk ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18, sowie eine Abgasdüse 19, die sämtlich um eine zentrale Triebwerksachse 1 angeordnet sind.

Der Mitteldruckkompressor 13 und der Hochdruckkompressor 14 umfassen jeweils mehrere Stufen, die jeweils in Umfangsrichtung verlaufende Anordnungen stationärer Kompressorleitschaufeln 20 aufweisen, die allgemein als Statorschaufeln bezeichnet werden und die radial nach innen vom Triebwerksgehäuse 21 in einen ringförmigen Strömungskanal der Kompressoren 13, 14 vorstehen.

Die Kompressoren 13, 14 weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinen 16, 17, 18 weisen ähnliche Stufen auf, umfassend eine Anordnung von festen Turbinenleitschaufeln 23, die radial nach innen vom Kerntriebwerk 21 in den ringförmigen Strömungskanal der Turbinen 16, 17, 18 vorstehen und eine nachfolgende Anordnung von Turbinenschaufeln 24, die nach außen von einer drehbaren Nabe 27 vorstehen.

Die Kompressortrommel oder Kompressorscheibe 26 und die darauf angeordneten Kompressorlaufschaufeln 22 sowie die Turbinenrotornabe 27 und die darauf angeordneten Turbinenlaufschaufeln 24 drehen sich im Betrieb um die Triebwerksachse 1.

Im Folgenden werden Ausführungsformen einer Strömungsleitvorrichtung mit einem Strömungsleitelement 30 (auch Windage Shield genannt) beschrieben, das einen Teilstrom 31 führen soll, der hinter Austrittsleitschaufeln 28 des Hochdruckkompressors 14 angeordnet ist.

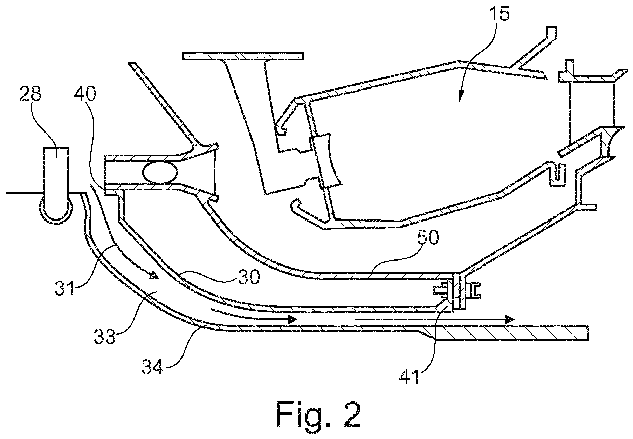

Dies ist in Fig. 2 dargestellt. Hinter der Austrittsleitschaufel 28 (OGV: Outlet Guide Vane) wird der Teilstrom 31 abgezweigt, der u.a. zu Kühlzwecken eingesetzt wird. Der Teilstrom 31 wird durch einen Ringkanal 33 geführt, der radial innen von einer Hochdruckwelle 34 und radial außen von dem Strömungsleitelement 30 begrenzt wird. Der Ringkanal 33 weist zum Auslauf hin etwa eine konstante Höhe auf. Zu Beginn ist der Ringkanal 33 etwas konvergent ausgebildet. In anderen Ausführungsformen kann der Ringkanal 33 auch einen anderen Höhenverlauf haben. Die gezielte Führung des Teilstroms 31 in dem Ringkanal 33 soll Verwirbelungen verhindern.

Das Strömungsleitelement 30 ist an zwei Stellen mit einem Bauteil 50 der Turbomaschine 100 - hier dem Brennkammergehäuse - verbunden.

Stromabwärts des Ringkanals 33 ist ein Festlager 41 für das Strömungsleitelement 30 angeordnet.

Stromaufwärts, im Bereich des Eintritts des Teilstroms 31 in den Ringkanal 33, ist eine reibschlüssige Verbindung mit einer Reibschlussverbindungsfläche 40 am Strömungsleitelement 30 vorgesehen.

Wie im Folgenden beschrieben wird, ist das Strömungsleitelement 30 besonders ausgebildet, damit sich die Reibschlussverbindung in der Strömungsleitvorrichtung effizient herstellen lässt.

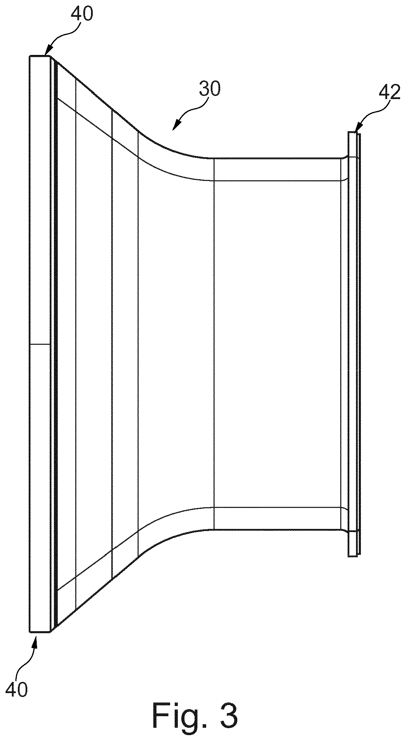

Diese Reibschlussverbindungsfläche 40 ist in Fig. 3 in einer Seitenansicht des Strömungsleitelements 30 am stromaufwärtsseitigen Ende erkennbar. Am gegenüberliegenden Ende des Strömungsleitelements 30 ist ein Flansch 42 angeordnet, der mit dem Festlager (siehe Fig. 2) verbindbar ist.

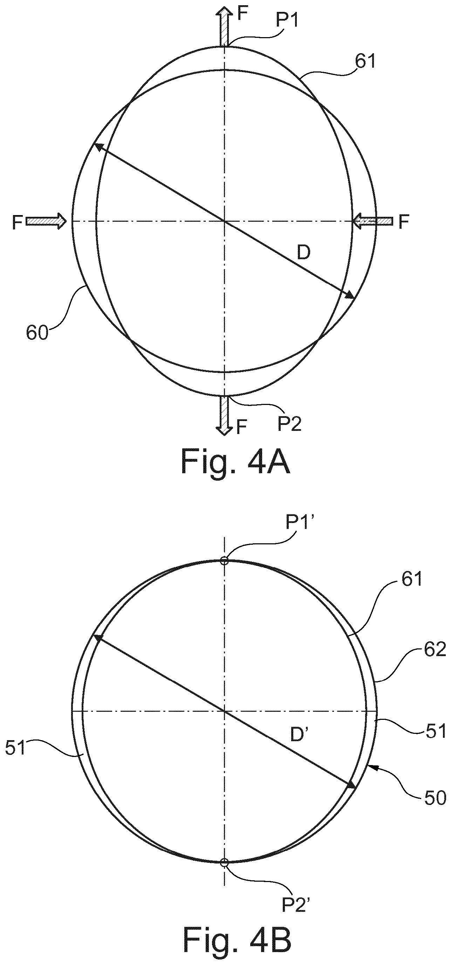

In den Fig. 4A, 4B ist schematisch dargestellt, dass die Querschnittsfläche des Strömungsleitelements 30 im Bereich der Reibschlussverbindungsfläche 40 zunächst nicht perfekt kreisförmig ist.

Ausgangspunkt für die Herstellung der Reibschlussverbindung ist zunächst das Strömungsleitelement 30 mit einer kreiszylindrischen Querschnittsfläche im Bereich der Reibschlussverbindungsfläche 40. Dies bedeutet, dass die Querschnittsfläche 60 (siehe Fig. 4A) des Strömungsleitelements 30 in diesem Bereich zunächst kreisförmig mit dem Durchmesser D ist.

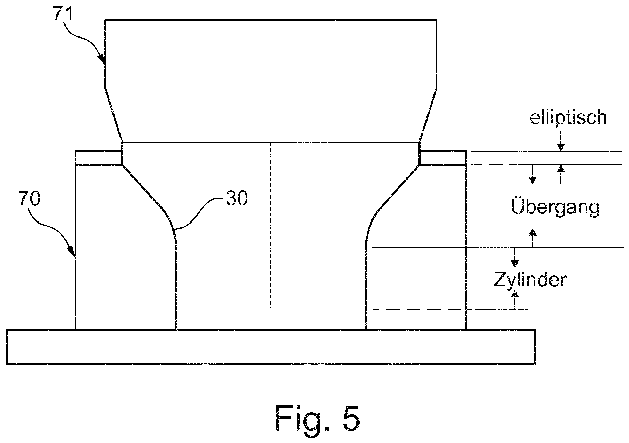

Ein Formwerkzeug 71 (siehe Fig. 5) mit einem nicht-kreisförmigen Querschnitt kann z.B. dazu verwendet werden, einem kreiszylindrischen Formkörper für das Strömungsleitelement 30 zumindest teilweise einen nicht-kreisförmigen Querschnitt als eine geschlossene Hüllfläche zu geben.

Das Strömungsleitelement 30 weist zur Verbindung des Strömungsleitelements 30 mit dem anderen Bauteil 50 der Turbomaschine 100 eine Reibschlussverbindungsfläche 40 am Umfang auf, wobei die Reibschlussverbindungsfläche 40 mit der geschlossenen Hüllfläche 61 mit mindestens zwei gegenüberliegenden Punkten P1, P2 in das Bauteil 50 mit einer kreiszylindrischen Dichtfläche 62 verformt gesetzt wird, so dass die mindestens zwei Punkte P1, P2 der geschlossenen Hüllfläche 61 im Zusammenbau nach Verformung in mindestens zwei gegenüberliegenden reibschlüssigen Kontaktbereichen P1', P2' der kreiszylindrischen Dichtfläche 62 angeordnet sind. Dies ist z.B. in Fig. 4A, 4B dargestellt.

Durch dieses Verfahren wird der Umfang des Strömungsleitelements 30 im Bereich der Reibschlussverbindungsfläche 40 zu einer Ellipse 61 verformt, was in Fig. 4A dargestellt ist. Der elliptische Querschnitt bildet eine geschlossene Hüllfläche 61 mit zwei gegenüberliegenden Punkten P1, P2 an den Enden der großen Achse der Ellipse.

Die Exzentrizität des elliptischen Querschnitts der geschlossenen Hüllfläche 61 ist in Fig. 4A stark verzerrt dargestellt, um das Prinzip deutlich zu machen. In der hier dargestellten Ausführungsform beträgt die Exzentrizität 0,9947, d.h. die Abweichung von der Kreisform ist klein. Typischerweise kann die Exzentrizität zwischen 0,95 und 0,999, insbesondere zwischen 0,99 und 0,996 liegen.

Die große Achse der geschlossenen Hüllfläche 61 mit elliptischem Querschnitt ist dabei so dimensioniert, dass die Ellipse sich mit dem Bauteil 50 durch eine Verformung des Strömungsleitelements 30 verbinden lässt. Die beiden Punkte P1, P2 der Ellipse werden durch die Verformung in zwei gegenüberliegende reibschlüssige Kontaktbereiche P1', P2' verschoben.

Der Durchmesser D' des Bauteils 50 entspricht somit im Wesentlichen der großen Achse der Ellipse 61.

Auf Grund der elliptischen Form bildet sich dann an den Seiten, d.h. im Bereich der kleinen Achse der Ellipse 61, jeweils seitlich (d.h. im Bereich der Endpunkte der kleinen Achse der Ellipse) ein Spalt 51 zur kreiszylindrischen Dichtfläche 62 aus. Der Spalt 51 kann an der Stelle der größten radialen Öffnung typischerweise auf beiden Seiten kleiner als 0,5 mm sein. Die Spalte 51 erlauben eine gewisse Ventilation, die erwünscht ist.

Durch die Verwendung eines Strömungsleitelements 30 mit einem elliptischen Ausgangsquerschnitt wird erreicht, dass es im Betrieb durch das Bauteil 50 behindert wird (Freiheitsgrad an der kleinen Halbachse der Ellipse).

Würde das Strömungsleitelement 30 kreiszylindrisch in das Bauteil 50 eingepresst werden, würde im Betrieb aufgrund der stärkeren Ausdehnung des Strömungsleitelements 30 eine hohe Kontaktkraft an der Reibschlussfläche 40 entstehen. Dieses würde dazu führen, dass das Strömungsleitelement 30 sich ausbeulen würde. Um dies zu verhindern wird die Reibschlussfläche 40 am Strömungsleitelement 30 elliptisch (oder auch polygonal etc.) ausgeführt, damit dem Strömungsleitelement 30 ein Freiheitsgrad zur ungehinderten Ausdehnung gegenüber dem Bauteil 50 gegeben ist.

Die beiden offenen Spalte 51 seitlich der kleinen Halbachse der Ellipse sollen sich im Betrieb nicht schließen, da sich sonst im Falle des Verdichterpumpens die Kavität zwischen dem Strömungsleitelement 30 und dem Bauteil 50 (zu sehen in Fig. 2) nicht entleeren kann und somit das Strömungsleitelement 30 aufgrund des hohen Druckunterschiedes ausbeulen würde.

In Fig. 5 ist eine Vorrichtung dargestellt, mit der ein Strömungsleitelement 30 der hier beschriebenen Art herstellbar ist.

Der Teil des Strömungsleitelements 30 mit einem kreiszylindrischen Querschnitt ist dabei unten in einer Werkzeugmatrize 70 angeordnet. In das obere Ende wird ein Formwerkzeug eingeführt, das einen elliptischen Querschnitt mit der gewünschten Exzentrizität aufweist. Durch Druck in das Strömungsleitelement 30 wird im oberen Teil des Strömungsleitelements 30 somit ein elliptischer Querschnitt erzielt, der kontinuierlich in einen kreisförmigen Querschnitt übergeht. Dies ist in Fig. 5 anhand der Übergangsbereiche rechts dargestellt.

### Bezugszeichenliste

- 1: Triebwerksachse

- 11: Lufteinlass
- 12: Fan
- 13: Mitteldruckkompressor
- 14: Hochdruckkompressor
- 15: Brennkammer
- 16: Hochdruckturbine
- 17: Mitteldruckturbine
- 18: Niederdruckturbine
- 19: Abgasdüse
- 20: Kompressorleitschaufeln
- 21: Kerntriebwerk
- 22: Kompressorlaufschaufeln
- 23: Turbinenleitschaufeln
- 24: Turbinenlaufschaufeln
- 26: Kompressortrommel oder -scheibe
- 27: Turbinenrotornabe
- 28: Austrittsleitschaufeln des Hochdruckkompressors

- 30: Strömungsleitelement
- 31: Teilstrom
- 32: Austrittsleitrad
- 33: Ringkanal
- 34: Hochdruckwelle

- 40: Reibschlussverbindungsfläche
- 41: Festlager
- 42: Flansch

- 50: Bauteil
- 51: Spalt zwischen verformtem Strömungsleitelement und Bauteil

- 60: Ausgangsquerschnitt für Strömungsleitelement
- 61: geschlossene Hüllfläche, z.B. Ellipse, Polygon
- 62: kreiszylindrische Dichtfläche

- 70: Werkzeugmatrize
- 71: Formwerkzeug

- 100: Turbomaschine / Flugzeugtriebwerk

- D, D': Durchmesser
- F: Kraft
- P1, P2: Punkte (vor Verformung)
- P1', P2': Kontaktbereiche (nach Verformung)

## Patentansprüche

1. Verfahren zur Ausbildung einer Strömungsleitvorrichtung einer Turbomaschine (100), für einen Teilstrom (31) der Austrittsströmung eines Austrittsleitrades (32) eines Verdichters (14), wobei ein Strömungsleitelement (30) im Zusammenbau einen Ringkanal (33) um eine Welle (34) der Turbomaschine (100) begrenzt, **dadurch gekennzeichnet, dass**
a) ein Formwerkzeug (71) mit einem nicht-kreisförmigen Querschnitt, dazu verwendet wird, einem kreiszylindrischen Formkörper für das Strömungsleitelement (30) zumindest teilweise einen nicht-kreisförmigen Querschnitt als eine geschlossene Hüllfläche zu geben,
b) das Strömungsleitelement (30) zur Verbindung des Strömungsleitelements (30) mit einem anderen Bauteil (50) der Turbomaschine (100) eine Reibschlussverbindungsfläche (40) am Umfang aufweist, wobei die Reibschlussverbindungsfläche (40) mit der geschlossenen Hüllfläche (61) mit mindestens zwei gegenüberliegenden Punkten (P1, P2) in das Bauteil (50) mit einer kreiszylindrischen Dichtfläche (62) verformt gesetzt wird, so dass die mindestens zwei Punkte (P1, P2) der geschlossenen Hüllfläche (61) im Zusammenbau nach Verformung in mindestens zwei gegenüberliegenden reibschlüssigen Kontaktbereichen (P1', P2') der kreiszylindrischen Dichtfläche (62) angeordnet sind.

2. Verfahren nach Anspruch 1, **dadurch gekennzeichnet, dass** die geschlossene Hüllfläche (61) einen elliptischen Querschnitt, einen regelmäßigen polygonalen Querschnitt oder einen ovalen Querschnitt aufweist.

3. Verfahren nach Anspruch 2, **dadurch gekennzeichnet, dass** der elliptische Querschnitt der geschlossenen Hüllfläche (61) eine Exzentrizität zwischen 0,95 und 0,999, insbesondere zwischen 0,99 und 0,996, aufweist.

4. Verfahren nach mindestens einem der vorhergehenden Ansprüche, **dadurch gekennzeichnet, dass** die Kontaktpunkte (P1, P2) an den Enden der großen Achse der geschlossen Hüllfläche (61) mit einem elliptischen Querschnitt liegen.

5. Verfahren nach mindestens einem der vorhergehenden Ansprüche, **dadurch gekennzeichnet, dass** die Reibschlussverbindungsfläche (40) eine Durchmessertoleranz von +/- 0,3 mm aufweist.

6. Verfahren nach mindestens einem der vorhergehenden Ansprüche, **dadurch gekennzeichnet, dass** das Bauteil (50) mit der kreiszylindrischen Dichtfläche (62) eine Durchmessertoleranz von +/- 0,1 mm aufweist.

7. Verfahren nach mindestens einem der vorhergehenden Ansprüche, **dadurch gekennzeichnet, dass** der Ringkanal (33) mindestens teilweise eine im Wesentlichen konstante radiale Höhe, einen konvergenten Teil und / oder einen divergenten Teil aufweist.

8. Verfahren nach mindestens einem der vorhergehenden Ansprüche, **dadurch gekennzeichnet, dass** nach Verformung des Strömungsleitelements (30 mit der geschlossenen Hüllfläche (61) beim Einbau in das Bauteil (50) zwischen der verformten Hüllfläche (61) und der kreiszylindrischen Dichtfläche (62) mindestens zwei Spalte (51) vorliegen.

9. Verfahren nach Anspruch 8, **dadurch gekennzeichnet, dass** bei einer Hüllfläche (61) mit elliptischem Querschnitt nach Umformung entlang der großen Achse der Ellipse zwischen der verformten Hüllfläche (61) und der kreiszylindrischen Dichtfläche (63) zwei Spalte (51) vorliegen.

10. Verfahren nach Anspruch 9, **dadurch gekennzeichnet, dass** die größte radialen Breite der zwei Spalte (51) kleiner als 0,5 mm ist, insbesondere kleiner als 0,3 mm, ganz insbesondere kleiner als 0,2 mm ist.

11. Verfahren nach mindestens einem der vorhergehenden Ansprüche, **dadurch gekennzeichnet, dass** das Strömungsleitelement (30) aus einer Nickellegierung, insbesondere Inconel 718, hergestellt ist.

12. Strömungsleitvorrichtung einer Turbomaschine (100), insbesondere eines Flugzeugtriebwerks, für einen Teilstrom (31) der Austrittsströmung eines Austrittsleitrades (32) eines Verdichters (14), herstellbar mit einem Verfahren nach einem der Ansprüche 1 bis 11, wobei ein Strömungsleitelement (30) im Zusammenbau einen Ringkanal (33) um eine Welle (34) der Turbomaschine (100) begrenzt,
**gekennzeichnet durch**
eine Reibschlussverbindungsfläche (40) am Umfang des Strömungsleitelements (30) zur Verbindung des Strömungsleitelements (30) mit einem anderen Bauteil (50) der Turbomaschine (100), wobei die Reibschlussverbindungsfläche (40) mit einer geschlossenen Hüllfläche (61) mit mindestens zwei gegenüberliegenden Punkten (P1, P2) in das Bauteil (50) mit einer kreiszylindrischen Dichtfläche (62) verformt einsetzbar ist, wobei die mindestens zwei Punkte (P1, P2) der geschlossenen Hüllfläche (61) im Zusammenbau nach Verformung in mindestens zwei gegenüberliegenden reibschlüssigen Kontaktbereichen (P1', P2') der kreiszylindrischen Dichtfläche (62) angeordnet sind, wobei auf Grund der elliptischen Form an den Seiten, im Bereich der kleinen Achse der Ellipse (61), jeweils seitlich im Bereich der Endpunkte der kleinen Achse der Ellipse ein Spalt (51) zur kreiszylindrischen Dichtfläche (62) vorliegt.

13. Turbomaschine (100), insbesondere ein Flugzeugtriebwerk, mit einer Strömungsleitvorrichtung nach Anspruch 12.

14. Turbomaschine nach Anspruch 13, **dadurch gekennzeichnet, dass** sich die Strömungsleitvorrichtung axial von dem Austrittsleitrad (32) eines Hochdruckkompressors (14) bis zum mittleren Bereich einer Brennkammer (15) erstreckt.

## Claims

1. Method for forming a flow guidance device of a turbomachine (100), for a partial stream (31) of the outlet flow of an outlet guide vane (32) of a compressor (14), wherein during assembly a flow guiding element (30) delimits an annular channel (33) around a shaft (34) of the turbomachine (100), **characterized in that**
a) a mould (71) with a non-circular cross section is used for at least partially imparting a non-circular cross section as a closed enveloping surface to a circular-cylindrical moulded body for the flow guiding element (30),
b) for the connection of the flow guiding element (30) to another component (50) of the turbomachine (100), the flow guiding element (30) has a frictional-engagement connecting surface (40) on the circumference, wherein the frictional-engagement connecting surface (40) with the closed enveloping surface (61) is inserted in a deformed state with at least two opposite points (P1, P2) into the component (50) with a circular-cylindrical sealing surface (62), so that during assembly the at least two points (P1, P2) of the closed enveloping surface (61) after deformation are arranged in at least two opposite frictionally engaging contact areas (P1', P2') of the circular-cylindrical sealing surface (62).

2. Method according to Claim 1, **characterized in that** the closed enveloping surface (61) has an elliptical cross section, a regular polygonal cross section or an oval cross section.

3. Method according to Claim 2, **characterized in that** the elliptical cross section of the closed enveloping surface (61) has an eccentricity between 0.95 and 0.999, in particular between 0.99 and 0.996.

4. Method according to at least one of the preceding claims, **characterized in that** the contact points (P1, P2) lie at the ends of the major axis of the closed enveloping surface (61) with an elliptical cross section.

5. Method according to at least one of the preceding claims, **characterized in that** the frictional-engagement connecting surface (40) has a diameter tolerance of +/- 0.3 mm.

6. Method according to at least one of the preceding claims, **characterized in that** the component (50) with the circular-cylindrical sealing surface (62) has a diameter tolerance of +/- 0.1 mm.

7. Method according to at least one of the preceding claims, **characterized in that** the annular channel (33) has at least partially a substantially constant radial height, a convergent part and/or a divergent part.

8. Method according to at least one of the preceding claims, **characterized in that**, after deformation of the flow guiding element (30) with the closed enveloping surface (61) during fitting into the component (50), there are at least two gaps (51) between the deformed enveloping surface (61) and the circular-cylindrical sealing surface (62).

9. Method according to Claim 8, **characterized in that**, in the case of an enveloping surface (61) with an elliptical cross section, after deformation there are along the major axis of the ellipse two gaps (51) between the deformed enveloping surface (61) and the circular-cylindrical sealing surface (63).

10. Method according to Claim 9, **characterized in that** the greatest radial width of the two gaps (51) is less than 0.5 mm, in particular less than 0.3 mm, most particularly less than 0.2 mm.

11. Method according to at least one of the preceding claims, **characterized in that** the flow guiding element (30) is produced from a nickel alloy, in particular Inconel 718.

12. Flow guidance device of a turbomachine (100), in particular an aircraft engine, for a partial stream (31) of the outlet flow of an outlet guide vane (32) of a compressor (14), which can be produced by a method according to one of Claims 1 to 11, wherein during assembly a flow guiding element (30) delimits an annular channel (33) around a shaft (34) of the turbomachine (100),
**characterized by**
a frictional-engagement connecting surface (40) on the circumference of the flow guiding element (30) for connecting the flow guiding element (30) to another component (50) of the turbomachine (100), wherein the frictional-engagement connecting surface (40) with a closed enveloping surface (61) can be inserted in a deformed state with at least two opposite points (P1, P2) into the component (50) with a circular-cylindrical sealing surface (62), wherein during assembly the at least two points (P1, P2) of the closed enveloping surface (61) after deformation are arranged in at least two opposite frictionally engaging contact areas (P1', P2') of the circular-cylindrical sealing surface (62), wherein, because of the elliptical form, there is a gap (51) with respect to the circular-cylindrical sealing surface (62) at the sides, in the area of the minor axis of the ellipse (61), in each case laterally in the area of the end points of the minor axis of the ellipse.

13. Turbomachine (100), in particular an aircraft engine, with a flow guidance device according to Claim 12.

14. Turbomachine according to Claim 13, **characterized in that** the flow guidance device extends axially from the outlet guide vane (32) of a high-pressure compressor (14) to the central area of a combustion chamber (15).

## Revendications

1. Procédé de constitution d'un dispositif de guidage de flux d'une turbomachine (100) pour un flux partiel (31) du flux de sortie d'un diffuseur de sortie (32) d'un compresseur (14), sachant qu'un élément de guidage de flux (30) limite dans le montage un conduit annulaire (33) autour d'un arbre (34) de la turbomachine (100), **caractérisé en ce que**
a) un outil de formage (71) avec une section transversale non circulaire est utilisé pour donner à un corps formé cylindrique circulaire pour l'élément de guidage de flux (30) au moins en partie une section transversale non circulaire sous la forme d'une surface d'enveloppe fermée,
b) l'élément de guidage de flux (30) pour la liaison de l'élément de guidage de flux (30) avec un autre composant (50) de la turbomachine (100) comporte une surface de liaison coopérant par friction (40) sur la périphérie, sachant que la surface de liaison coopérant par friction (40) avec la surface d'enveloppe fermée (61) est placée déformée avec au moins deux points opposés (P1, P2) dans le composant (50) avec une surface d'étanchéité cylindrique circulaire (62) de telle manière que les au moins deux points (P1, P2) de la surface d'enveloppe fermée (61) sont disposés dans le montage après déformation dans au moins deux zones de contact opposées coopérant par friction (P1', P2') de la surface d'étanchéité cylindrique circulaire (62).

2. Procédé selon la revendication 1, **caractérisé en ce que** la surface d'enveloppe fermée (61) comporte une section transversale elliptique, une section transversale polygonale régulière ou une section transversale ovale.

3. Procédé selon la revendication 2, **caractérisé en ce que** la section transversale elliptique de la surface d'enveloppe fermée (61) comporte une excentricité se situant entre 0,95 et 0,999, notamment entre 0,99 et 0,996.

4. Procédé selon au moins l'une quelconque des revendications précédentes, **caractérisé en ce que** les points de contact (P1, P2) se situent aux extrémités du grand axe de la surface d'enveloppe fermée (61) avec une section transversale elliptique.

5. Procédé selon au moins l'une quelconque des revendications précédentes, **caractérisé en ce que** la surface de liaison coopérant par friction (40) comporte une tolérance de diamètre de +/- 0,3 mm.

6. Procédé selon au moins l'une quelconque des revendications précédentes, **caractérisé en ce que** le composant (50) avec la surface d'étanchéité cylindrique circulaire (62) comporte une tolérance de diamètre de +/-0,1 mm.

7. Procédé selon au moins l'une quelconque des revendications précédentes, **caractérisé en ce que** le conduit annulaire (33) comporte au moins en partie une hauteur radiale pour l'essentiel constante, une partie convergente et/ou une partie divergente.

8. Procédé selon au moins l'une quelconque des revendications précédentes, **caractérisé en ce qu'**après la déformation de l'élément de guidage de flux (30) avec la surface d'enveloppe fermée (61), au moins deux interstices (51) existent lors du montage dans le composant (50) entre la surface d'enveloppe déformée (61) et la surface d'étanchéité cylindrique circulaire (62).

9. Procédé selon la revendication 8, **caractérisé en ce que** pour une surface d'enveloppe (61) avec une section transversale elliptique deux interstices (51) existent après déformation le long du grand axe de l'ellipse entre la surface d'enveloppe déformée (61) et la surface d'étanchéité cylindrique circulaire (63).

10. Procédé selon la revendication 9, **caractérisé en ce que** la largeur radiale maximale des deux interstices (51) est inférieure à 0,5 mm, notamment inférieure à 0,3 mm, tout particulièrement inférieure à 0,2 mm.

11. Procédé selon au moins l'une quelconque des revendications précédentes, **caractérisé en ce que** l'élément de guidage de flux (30) est fabriqué dans un alliage de nickel, notamment en Inconel 718.

12. Dispositif de guidage de flux d'une turbomachine (100), notamment d'un moteur d'aéronef, pour un flux partiel (31) du flux de sortie d'un diffuseur de sortie (32) d'un compresseur (14), réalisable avec un procédé selon l'une quelconque des revendications 1 à 11, sachant qu'un élément de guidage de flux (30) limite dans le montage un conduit annulaire (33) autour d'un arbre (34) de la turbomachine (100),
**caractérisé par**
une surface de liaison coopérant par friction (40) sur la périphérie de l'élément de guidage de flux (30) pour relier l'élément de guidage de flux (30) à un autre composant (50) de la turbomachine (100), sachant que la surface de liaison coopérant par friction (40) avec une surface d'enveloppe fermée (61) peut être utilisée de manière déformée avec au moins deux points opposés (P1, p2) dans le composant (50) avec une surface d'étanchéité cylindrique circulaire (62), sachant que les au moins deux points (P1, P2) de la surface d'enveloppe fermée (61) sont disposés dans le montage après déformation dans au moins deux zones de contacts (P1', P2') opposées coopérant par friction de la surface d'étanchéité cylindrique circulaire (62), sachant que sur la base de la forme elliptique un interstice (51) existe par rapport à la surface d'étanchéité cylindrique circulaire (62) sur les côtés, dans la zone du petite axe de l'ellipse (61), respectivement latéralement dans la zone des points extrêmes du petit axe de l'ellipse.

13. Turbomachine (100), notamment un moteur d'aéronef avec un dispositif de guidage de flux selon la revendication 12.

14. Turbomachine selon la revendication 13, **caractérisée en ce que** le dispositif de guidage de flux s'étend axialement du diffuseur de sortie (32) d'un compresseur à haute pression (14) jusqu'à la zone médiane d'une chambre de combustion (15).
